# EUROPEAN PATENT APPLICATION

(11) **EP 4 678 290 A1**
(43) Date of publication of application: **14.01.2026**
(21) Application number: 25187619.9
(22) Date of filing: 04.07.2025
(51) Int. Cl.: B03B 5/28, B03B 5/62, B03B 9/06, B09B 3/35

(54) **METHOD AND APPARATUS FOR SEPARATING SOLID METAL AND/OR INORGANIC MATERIAL FROM ORGANIC-POLYMERIC MATERIAL DERIVING FROM THE RECYCLING TREATMENT OF PHOTOVOLTAIC MODULES**

(30) Priority: 09.07.2024 IT 202400015817
(71) Applicant: Ecowetech Srl, 35010 San Pietro in Gu (PD) (IT)
(72) Inventor: Turco Liveri, Federico, 36100 Vicenza (VI) (IT); Sartore, Domenico, 35010 Carmignano di Brenta (PD) (IT); Pinaffo, Lara, 35010 San Giorgio delle Pertiche (PD) (IT)
(74) Representative: Petraz, Gilberto Luigi

(57) **Abstract**

Method for separating solid metal and/or inorganic material from organic-polymeric material deriving from the recycling treatment of at least one photovoltaic module (11), comprising at least a first step of obtaining a granular mixture formed by said solid metal and/or inorganic material and said organic-polymeric material deriving from the recycling treatment of at least one photovoltaic module (11), and at least a second step of introducing said granular mixture inside a sedimentation tank (18) provided with a stirring system (19) so as to carry out at least a first separation of recovery materials (R1) which are extracted from the sedimentation tank (18).

## Description

### FIELD OF THE INVENTION

The present invention concerns a method and an apparatus for separating solid metal and/or inorganic material from organic-polymeric material deriving from the recycling treatment of photovoltaic modules.

### BACKGROUND OF THE INVENTION

Photovoltaic panels, that is, optoelectronic devices, composed of photovoltaic modules, in turn consisting of photovoltaic cells, capable of converting solar energy into electrical energy by photovoltaic effect, typically used as generators, are known. These panels are generally formed by a sandwich of various materials, including glass and polymeric material, with photovoltaic strings interposed typically composed, in turn, of photovoltaic conductive cells, the latter electrically connected to each other by conductive strips composed of metal material, usually called "ribbons".

These multi-material sandwiches are generally subjected to hot rolling so as to compact the layers and define the photovoltaic module itself, which undergoes subsequent finishing and framing operations, and electronic connections to perform its known functions.

The use of these devices is increasingly widespread, due to pressing energy demands and in order to lower the cost of energy.

However, the imposition of a circular economy system, necessary in order to guarantee a low environmental impact (with regard in particular to large-scale distribution commodity products), entails the need to introduce optimization in the treatment of end-of-life photovoltaic modules.

At the end of their life, or due to external factors that have compromised their integrity or use, or due to construction defects, the modules have to be treated appropriately so as to obtain the purest possible materials for re-introduction and re-use as raw material for subsequent production processes.

However, one of the greatest limitations in recycling the modules is the use of technologies that obtain poorly purified material, or material purified with high environmental and energy impact methodologies that in turn create by-products that need to be treated and disposed of.

During the implementation of known recycling methods, it is frequent to find polymeric fractions mixed with high-value metal and/or inorganic fractions, which are not currently separated and extracted in a suitable manner.

A method for recovering material originating from photovoltaic panels is known from CN 217 647 126 U. This method provides to separate silicon powder and metal powder using a flotation system consisting of two tanks that cooperate with a motor mixer and have various inlet channels and a discharge zone. The flotation tank is filled with water and two types of additives: a collector (kerosene) that allows the metal fraction to bind and be transported to the surface more easily; and a foaming agent that allows the materials to be transported, since the metal binds to the bubbles that rise to the surface, while the silicon creates aggregates due to the presence of water and sediments on the bottom. The preparation for this type of separation includes various operations. The first step is the removal of the cables, junction boxes and panel frame, followed by two trituration operations, two screenings and a pyrolysis heat treatment to remove the parts of polymeric material. There are two flotation tanks so that the material floating in the first tank can be recovered and inserted into the second tank, in order to repeat the operation and obtain a cleaner material at outlet. On the bottom of the tanks there is an aperture that allows the sedimented material to be removed.

The separation system described in CN' 126, in which the metal fraction floats while the silicon fraction deposits, is not based on a difference in density, otherwise the opposite would occur, or both would sediment. Furthermore, in this document the polymeric fraction is removed by means of a pyrolysis heat treatment. Neither the use of kerosene as a collector or the pyrolysis operation to remove the polymeric fraction guarantee the complete sustainability of the process, consequently the recovered materials need various cleaning treatments in order to be reused.

A method for separating materials deriving from photovoltaic panels that uses resin to perform a separation through flotation/sedimentation is known from JP 2023 122558. The resin is pre-ground and screened before being sorted according to the difference in specific weight. In this method, a double flotation system is used with the liquids of different specific weight for the separation of EVA and PET. This document provides a first step in which the PET is sedimented together with the copper and the cell powder. Moreover, this document describes how to obtain a high purity EVA or PET fraction by focusing on the specific weight of a solution of water and salt. With a certain density a purer EVA fraction is obtained, while with a higher density a purer PET fraction is obtained.

In particular, this document specifically aims to separate EVA from PET, and its implementation depends to a large extent on external environmental conditions.

There is therefore the need to perfect a method and an apparatus for separating metal and/or inorganic materials from organic-polymeric materials deriving from the recycling treatment of photovoltaic modules that can overcome at least one of the disadvantages of the state of the art.

Specifically, one purpose of the present invention is to develop a method for separating solid metal and/or inorganic materials from organic-polymeric materials deriving from the recycling treatment of photovoltaic modules that has a low energy and environmental impact, is entirely mechanical, allows for optimal waste reduction, and does not require any polluting additives nor additional special treatments to clean the recovered materials.

Another purpose of the present invention is to provide a simple and efficient apparatus for separating metal and/or inorganic materials from organic-polymeric materials deriving from the recycling treatment of photovoltaic modules.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a method according to the present invention for separating solid metal and/or inorganic material from organic-polymeric material deriving from recycling treatments of at least one photovoltaic module comprises:
- at least a first step of obtaining a granular mixture formed by the solid metal and/or inorganic material and the organic-polymeric material deriving from recycling treatments of at least one photovoltaic module, and
- at least a second step of introducing the granular mixture inside a sedimentation tank provided with a stirring and mixing system, so as to carry out at least a first mechanical separation of first recovery materials which are extracted from the sedimentation tank;
- at least a third step of flotation in a flotation tank in which, by means of an air flow, the organic-polymeric material having a larger surface area than the solid metal material is brought to the surface.

The solid metal and/or inorganic material and the organic-polymeric material deriving from recycling treatments of at least one photovoltaic module are both solid.

Thanks to this method, it is possible to achieve, in a simple and effective manner, a clear separation of solid metal and/or inorganic material with a specific weight higher than that of the process fluid, from organic-polymeric material with a specific weight lower than that of the process fluid, deriving from recycling treatments of at least one photovoltaic module. Moreover, the method has a low energy and environmental impact and allows for optimal waste reduction and the production of materials that do not require intensive and specific cleaning treatments.

According to another aspect of the invention, the first recovery materials are subjected to a drying step.

According to another aspect of the invention, the additional recovery materials are also subjected to a drying step.

The invention also concerns an apparatus for implementing a method as disclosed above, comprising at least one sedimentation tank provided with a stirring system so as to carry out at least a first separation of recovery materials which are extracted from the sedimentation tank, and at least one flotation tank, equipped with air flow delivery systems, located downstream of the sedimentation tank, from which additional recovery materials are extracted.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is an example view of a photovoltaic module;
- fig. 2 is an example cross-section of the various layers that compose a double-glass module of the photovoltaic module;
- fig. 3 is an example flow diagram of the present method for separating metal and/or inorganic solids from organic-polymeric material deriving from the recycling treatment of photovoltaic modules;
- fig. 4 schematically shows a sedimentation tank with a stirring system;
- fig. 5 schematically shows a flotation tank.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

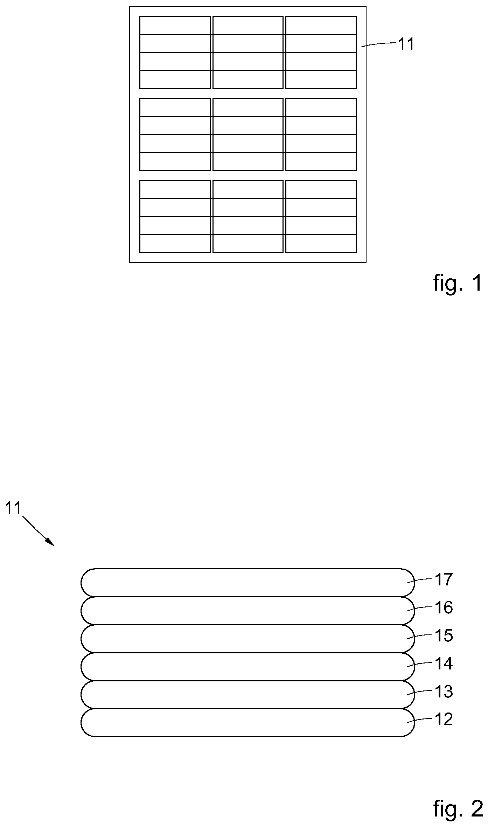

With reference to the attached drawings, see in particular fig. 1 and fig. 2, purely by way of example a typical photovoltaic module 11 generally comprises a series of layered components: a frame 12, for example in aluminum or other material, a rear glass or backsheet 13, an encapsulating layer 14 made of ethylene vinyl acetate copolymer (EVA) or suchlike, a matrix 15 of photovoltaic cells, another encapsulating layer 16 and a front glass 17.

The photovoltaic cells of the matrix 15 are based on silicon doped using various materials depending on the type of technology that the photovoltaic module adopts. These photovoltaic cells are electrically connected to each other by a plurality of conductive strips (ribbons), normally based on copper covered by an alloy of tin and lead, tin and silver, lead tin and silver or other, depending on the technology used by the module's manufacturer. The latter define the circuit through which the electrical energy is conveyed to the normal management electronics, of a type substantially known and not shown.

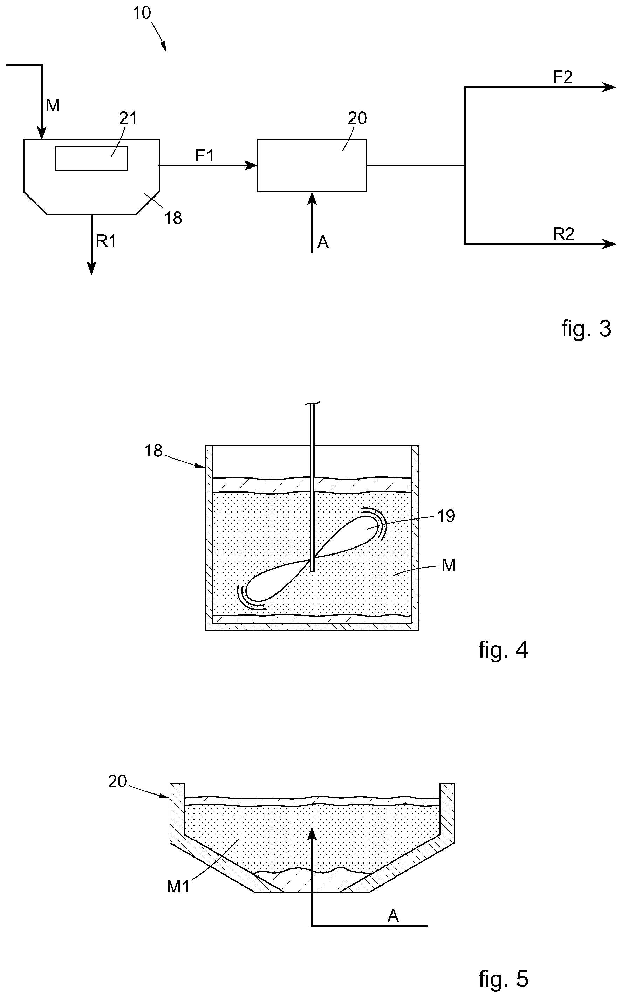

With reference in particular to fig. 3 and fig. 4, an apparatus 10 according to the present invention is applied within the recycling process of photovoltaic modules, such as for example that of fig. 1, or others. Firstly, a mixture M of components of the photovoltaic module 11 is obtained by means of, for example, a crushing, grinding, triturating, pulverizing step or suchlike, from which grains of suitable granulometry are obtained. The granulometry of this mixture M is comprised between approximately 2 mm and approximately 0.060 mm. This mixture M is composed of materials that can be distinguished between materials with a specific weight higher than that of the process fluid and materials with a specific weight lower than that of the process fluid, that is, the fluid used in a subsequent sedimentation step. Specifically, among the materials with a specific weight higher than that of the process fluid, metals, polymers and other inorganic compounds are identified, depending on the variability of the technologies present on the photovoltaic market.

The apparatus 10 comprises a sedimentation tank 18 equipped with a special stirring system 19 able to impart a swirling motion, advantageously with variable speed, to the mixture M that is fed to the sedimentation tank 18.

Inside the sedimentation tank 18 there is a special supernatant removal system 21 that feeds the supernatant to a flotation tank 20, disposed downstream and forming part of the apparatus 10.

The sedimentation tank 18 is sized so as to be able to accommodate the correct proportions of material, that is, liquid to be added to the mixture M for example, according to the needs of the plant. In order to guarantee the effectiveness of the process, it is necessary that the sizing takes into account the need to guarantee a macroscopic motion of the mixture M, in order to allow the liquid to wet all the particles of powder, regardless of the granulometry. It is important to take into account that macroscopic powders could create a waterproofed layer, or agglomerates, which can compromise the correct course of the process.

In particular, the stirring system 19 allows to create a slow but also swirling macroscopic motion in order to exploit, for the process, the different specific weights of the materials of which the molecules are composed, so as to implement a separation of the different materials and then proceed to the recovery of the materials of interest. First recovery materials R1, composed of materials with a specific weight higher than that of the process fluid, which therefore constitute the precipitate, are extracted from the bottom of the sedimentation tank 18 and possibly dried.

Furthermore, the surface material removal system 21 can be, for example, a recovery auger or, again by way of example, a foaming and/or mechanical removal system. A flow F1 of supernatant material lighter than the extracted material R1 is therefore created by the removal system 21, which is then sent to the flotation tank 20.

In the flotation tank 20, air A is blown into the mixture M1 obtained from the flow F1 of supernatant coming from the sedimentation tank 18. Therefore, there is essentially a flotation step in which the air A is blown into the mixture M1 in a position that is suitable for the process, to induce stirring and allow additional particles of plastic material to come to the surface, preventing them from being incorporated by heavier material and therefore being dragged to the bottom. In the flotation tank 20 there are then steps of decantation and flotation of the mixture M1.

From the flotation tank 20, a flow of supernatant fluid F2 is obtained following the flotation, which is compacted and dried. The liquid in the process, for example inside the sedimentation tank 18 and/or the flotation tank 20, is treated so as to then be reintegrated into the process.

Always by way of example, the treatment of the process liquid can be carried out by means of a consequential filtration system, in order to separate any suspended solids, and/or reverse osmosis.

The flotation tank 20 includes a mechanical removal, or foaming, or overflow system.

Recovery material R2, such as metal and inorganic particles, which can be treated by drying and desiccating, is also collected from the flotation tank 20, thus obtaining a clear separation from the organic-polymeric particles.

The drying can take place, for example, by means of one or more of the following modes: direct heating, for example UV, or through forced convection by means of a blow of hot air, or dehydration by means of a dehydrator, in combination with mechanical stirring to allow the drying process to spread over the entire thickness, or by means of a conveyor belt system, or by blowing hot air once the material has been deposited on a fine mesh grid.

It is clear that modifications and/or additions of parts may be made to the method and apparatus for separating metal and/or inorganic solids from organic-polymeric material deriving from the recycling treatment of photovoltaic modules as described heretofore, without thereby departing from the field and scope of the present invention, as defined by the claims.

It is also clear that, although the present invention has been described with reference to some specific examples, a person of skill in the art will be able to achieve other equivalent forms of method and apparatus for separating metal and/or inorganic solids from organic-polymeric material deriving from the recycling treatment of photovoltaic modules, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Method for separating solid metal and/or inorganic material from organic-polymeric material deriving from the recycling treatment of at least one photovoltaic module (11), **characterized in that** it comprises at least a first step of obtaining a granular mixture (M) formed by said solid metal and/or inorganic material and said organic-polymeric material, at least a second step of introducing said granular mixture inside a sedimentation tank (18) provided with a stirring and mixing system (19) so as to carry out at least a first mechanical separation of first recovery materials (R1) which are extracted from said sedimentation tank (18) and at least a third step of flotation in a flotation tank (20) in which, by means of an air flow, the organic-polymeric material contained in said first recovery materials (R1) and having a larger surface area than the solid metal material is brought to the surface in order to obtain second recovery materials (R2).

2. Method as in claim 1, **characterized in that** said first recovery materials (R1) are subjected to a drying step.

3. Method as in claim 1, **characterized in that** said additional recovery materials (R2) are subjected to a drying step.

4. Method as in one or the other of the previous claims, **characterized in that** obtaining the granular mixture provides a crushing, grinding, triturating, pulverizing step or suchlike, in which a mixture (M) of components of the photovoltaic module (11) is obtained, with grains of granulometry comprised between approximately 2 mm and approximately 0,060 mm.

5. Method as in one or the other of the previous claims, **characterized in that** said air flow in said flotation tank (20) induces stirring and allows additional particles of organic-polymeric material to come to the surface, so as to prevent them from being incorporated by heavier material and therefore being dragged to the bottom.

6. Apparatus (10) for implementing a method as in any claim hereinbefore, **characterized in that** it comprises at least one sedimentation tank (18) provided with a stirring system (19) for stirring a mixture (M) so as to carry out at least a first separation of first recovery materials (R1) which are extracted from said sedimentation tank (18), and at least one flotation tank (20) located downstream of said sedimentation tank (18), from which additional recovery materials (R2) are extracted.

7. Apparatus (10) as in claim 6, **characterized in that** said stirring system (19) is a mixer able to impart a swirling motion, advantageously with variable speed, to the mixture M which is fed to said sedimentation tank (18).

8. Apparatus (10) as in claim 6 or 7, **characterized in that** said flotation tank (20) includes a mechanical removal, or foaming, or overflow system.
